# EUROPEAN PATENT APPLICATION

(11) **EP 4 507 039 A1**
(43) Date of publication of application: **12.02.2025**
(21) Application number: 23190381.6
(22) Date of filing: 08.08.2023
(51) Int. Cl.: H01M 4/86, H01M 8/16

(54) **ASYMMETRIC PH CONTROL IN A BIOFUEL CELL**

(71) Applicant: BeFC, 38000 Grenoble (FR)
(72) Inventor: SOLAN, Sébastien, 38320 EYBENS (FR); DEMIR, Bilal, 38100 GRENOBLE (FR); D'ACCRISCIO, Florian, 38190 LES ADRETS (FR); HAMMOND, Jules, 38610 GIERES (FR)
(74) Representative: Novagraaf Technologies

(57) **Abstract**

The present invention relates to a polyelectrolyte complex-based ink formulation (PEC-based ink formulation), and its use for asymmetric pH control in a biofuel cell.

## Description

### Technical field of the invention

The present invention relates to a polyelectrolyte complex-based ink formulation (PEC-based ink formulation), and its use for asymmetric pH control in a biofuel cell.

In the description below, references in square brackets ([ ]) refer to the list of references at the end of the text.

### State of the art

Biological fuel cells (Biofuel cells) offer an attractive means to provide eco-friendly and sustainable power to electronic devices, particularly for small portable devices for applications such as healthcare, environmental monitoring, bio-defense, etc. Given that enzyme-based fuel cells can operate using substrates that are abundant in the biological fluids and environmental effluent (i.e., glucose and oxygen) whilst exhibiting power densities that are often superior to microbial fuel cells, they offer an attractive proposition to augment or self-powered miniaturized wearable or implantable devices [1,2,3]. Furthermore, paper-based devices are gaining popularity as propositions for these types of applications owing to their low mass, small form factor and flexibility, allowing them to conform to a range of different surfaces.

The core technology of a biofuel cell is based on a couple of redox enzymes that ensure the catalysis of the fuels. Each enzyme is located at one electrode and coexists in one closed system. However, to reach its optimum enzymatic activity, an enzyme needs to work at a given pH [4].

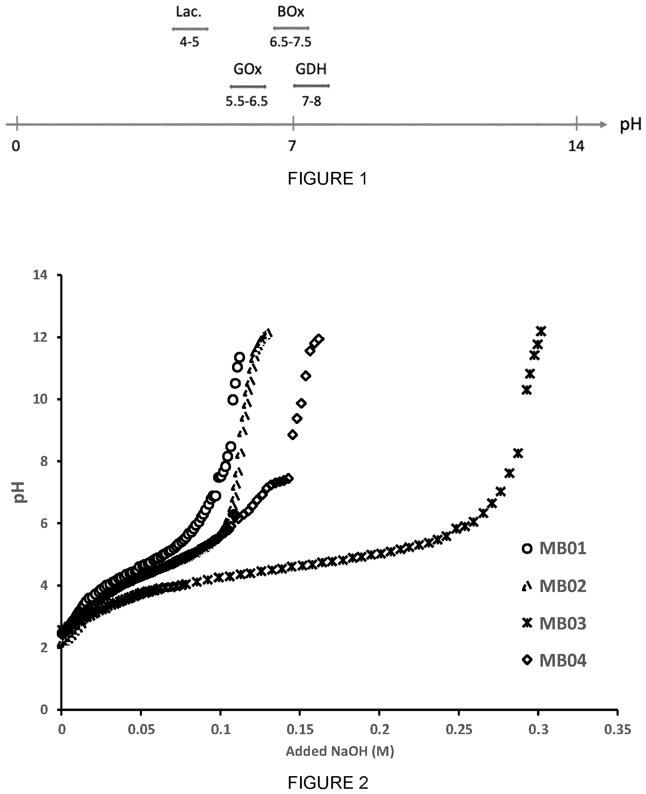

A bio-enzymatic fuel cell is composed of a bioanode, a biocathode, a separator and an electrolyte. Biofuel cells could typically be based on glucose/O₂ fuels with enzyme couples such as Glucose oxidase (GOx) / Laccase (Lac.) or Glucose dehydrogenase (GDH) / Bilirubin oxidase (BOx). To get full capacity of this dual system, each enzyme should work at its optimum pH. Working at its optimum pH, an enzyme will preserve its conformation and therefore its optimal catalytic activity. Figure 1 shows pH range that are usually targeted for enzyme in biosensor or biofuel cell applications [4].

Therefore, the pH media should remain as stable as possible during the cycle life of a biofuel cell. To this aim, a buffer solution is often used in order to maintain the environmental pH stable. A buffer is a solution that contains a weak acid and a conjugate base, or vice versa, and resist changes in pH when a small amount of acid or base is added to the media. Buffer solutions commonly introduced in biofuel cell are sodium phosphate buffer (NaPB) solution, phosphate buffer saline (PBS), HEPES, citrate buffer solution or Tris buffer [2, 5]. However, it does not give a satisfactory answer to this dual system problem as one can only add one buffer solution in it (two enzymes having different optimum pH). Another drawback is that a buffer solution can be contaminated with microorganisms and is not suitable for long-term storage, so buffer solutions must be freshly prepared when needed.

Polyelectrolyte complexes (PECs) are formed through cooperative electrostatic interactions between polycations and polyanions leading to the formation of non-permanent networks without the need for chemical cross-linkers [6]. PECs can be composed of synthetic or natural polymers [6]. In the perspective of a biofuel cell application that must be made of biodegradable materials, bio-sourced polymers are preferred. Among them, carboxymethylcellulose (CMC) and chitosan (CHI) are advantageously chosen as polyanion and polycation, respectively [13, 14]. Inter-macromolecular interactions are also involved including H-bonding, van der Waals forces, hydrophobic interactions and dipole interactions. Due to these specific properties, PECs were mostly used as immobilization matrix for enzyme entrapment in applications such as drug delivery [7, 8], biosensor [9, 10], biocatalysis [11] or biofuel cell [12]. However, biofuel cell applications are only based on PEC immobilization films obtained *via* drop-casting technics, which render its mass production use in a difficult way.

Therefore, there is still the need of a solution that would allow two different enzymes in a closed system to work at their optimum pH in a mass production perspective.

### Description of the invention

Printed electrodes gained a lot popularity due to the use of more environmental friendly solutions. Many of the enzyme-based electrodes to be used in biosensors and/or biofuel cells have a collective architecture based on printing conductive ink and later depositing enzyme solution on the printed support. In terms of mass production of enzyme-based biofuel cells made with printed electrodes, formulation of enzyme containing inks is a one-step and low-cost method. However, it brings certain limitations since enzymes are not capable for extreme conditions in terms of temperature, high shear rate of mixing etc.

The current invention states the fabrication of polyelectrolyte complex-based ink formulations in the construction of printed biofuel cell electrodes (biocathode and bioanode) which contain enzymes as sensitive biological structures. The presence of polyelectrolyte complex (PEC), made by combining positively charged polymer and negatively charged polymer, in the ink formulations have a great potential to create a self-buffering media and to protect the enzyme activity and stability (immobilization/encapsulation), and to the use of a wide range of enzymes whose optimum working pHs are in different regions. Moreover, polyelectrolyte complexes are preferably composed of bio-based and biodegradable polymers. This invention is a clear improvement compared to the state of the art where only one buffer solution is used.

The general development concept of the invention includes some main steps as production of PEC-based master batch formulations, physicochemical characterisations, ink formulations with enzyme and printing on paper, and finally investigation of electrochemical behaviours.

The design of PEC system consists of two main polyelectrolytes: a polyanion and a polycation. As aforementioned, these systems have been a great use case for 3D printing and encapsulation of drugs/proteins. They are also studied immensely to produce functional surfaces. Since this method is based on self-assembling via ionic interactions, it creates a time-consuming and may not be applicable for every surface and patterns in terms of scaled up productions. This invention brings out a new opportunity by introducing these PECs in bulk form for the big manufacture of ink formulations and demonstrates new use cases for biofuel cells, biosensors and bioelectronics.

An object of the present invention is therefore a polyelectrolyte complex (PEC) matrix comprising or consisting of a mixture of a polyanion, a polycation and mesoporous carbon.

According to a particular embodiment of the PEC system of the present invention, the polyanion is chosen from the group consisting of natural polyanion (such as carboxymethyl cellulose, carrageenan, sodium alginate, gellan gum, polygalacturonic acid, nucleic acid and its grafted versions, or a combination thereof), or synthetic polyanion (such as poly(acrylic acid), poly(sodium styrene sulfonate), poly(vinyl sulfate), poly(sodium acrylate) and its grafted versions, or a combination thereof). Preferably, the polyanion is chosen from the group consisting of natural polyanion.

According to a particular embodiment of the PEC system of the present invention, the polycation is chosen from the group consisting of natural polycation (such as chitosan, gelatin, dextran, starch, poly(L-lysine) and its grafted versions or a combination thereof), or synthetic polycation (such as polyethylene imine, poly(allylamine hydrochloride), poly(3,4-ethylenedioxythiophene), poly(diallyldimethylammonium chloride) and its grafted versions or a combination thereof). Preferably, the polycation is chosen from the group consisting of natural polycation.

According to a particular embodiment of the PEC system of the present invention, the mesoporous carbon is chosen from the group consisting of carbon black (as an example, KB600JD, CAS number:1333-86-4), carbon aerogel, or a combination thereof.

Another object of the present invention is a PEC-based ink formulation comprising or consisting of the mixture of the PEC system according to the present invention with the following materials; (1) at least one carbon-based nanomaterial, (2) a non-ionic binder, (3) an enzyme, and (4) graphite.

According to a particular embodiment of the PEC-based ink formulation of the present invention, the at least one carbon-based nanomaterial is chosen from the group consisting of carbon nanotubes, nanohorns, nanofibers, nanowires, or a combination thereof.

According to a particular embodiment of the PEC-based ink formulation of the present invention, the non-ionic binder is chosen from the group consisting of glue-like synthetic polymers (polyvinyl alcohol, poly(styrene-butadiene)), polyvinylmethacrylate and its grafted versions, or a combination thereof.

According to a particular embodiment of the PEC-based ink formulation of the present invention, the enzyme is chosen from the group consisting of oxidoreductases, in particular glucose oxidase, glucose dehydrogenase, lactate dehydrogenase, multicopper oxidases such as laccase and bilirubin oxidase, or a combination thereof.

Another object of the present invention is a bioelectrode comprising a PEC-based ink formulation of the present invention. For example, the bioelectrode is a bioanode. For example, the bioelectrode is a biocathode.

Another object of the present invention is a biofuel cell comprising a bioelectrode of the present invention.

Another object of the present invention is a method for preparing a PEC-based ink formulation of the present invention, said method comprising the steps of:
a) mixing a polycation, a polyanion and mesoporous carbon, to form a hydrogel.
b) stirring the mixture polycation:polyanion:mesoporous carbon of step a), to avoid macro-sized hydrogel particles to form the PEC-based masterbatch formulation; and
c) adding at least one carbon-based nanomaterial, a non-ionic binder, an enzyme and graphite to the mixture of step c) to form the PEC-based ink formulation.

According to a particular embodiment of the method of the present invention, the step a) is carried out by dispersing powdered mesoporous carbon in a polyanion solution then by adding a polycation solution to the mixture.

According to a particular embodiment of the method of the present invention, the step b) is carried out by stirring the mixture for 20 minutes with increasing speed per 5 minutes from 5000 to 20000 rpm.

According to a particular embodiment of the method of the present invention, the step b) further comprises shearing the stirred mixture.

Another object of the present invention is the use of a PEC-based ink formulation of the present invention, for asymmetric pH control in a biofuel cell.

### Brief description of the figures

Figure 1 represents optimum pH enzymatic activity of several enzymes.
Figure 2 represents pH titrations of PEC colloids with the additions of NaOH under ambient conditions.
Figure 3 represents buffering capacity curves of the prepared PEC colloids.
Figure 4 represents electrochemical performance of MB03 PEC-based printed bioanodes in terms of catalytic activity for different pHs of activation solution.
Figure 5 represents electrochemical performance of MB03 PEC-based printed bioanodes in terms of open circuit voltage for different pHs of activation solution.
Figure 6 represents electrochemical performance of MB03 PEC-based printed bioanodes in terms of catalytic activity for different pHs of MB03 PEC colloid in the ink formulation.
Figure 7 represents electrochemical performance of MB03 PEC-based printed bioanodes in terms of open circuit potential for different pHs of MB03 PEC colloid in the ink formulation.

### EXAMPLES

### EXAMPLE 1 : MATERIALS AND METHODS

### 1. Production of PolyElectrolyte Complex (PEC) based Master Batches (MB)

Initial tests were performed to integrate a proper PEC system as master batches (MB). Carbon black (CB, Ketjen Black, KJ 600D) was introduced to PEC system which is made of polyanions such as carboxymethyl cellulose (CMC, 90 kDa, Sigma Aldrich) and polycations such as chitosan (CHI, Low Molecular Weight, Sigma Aldrich). The tested master batches were formulated as shown in Table 2. In brief, CMC and CHI solutions were prepared by overnight dissolution in distilled water and 1.0 %, w/w acetic acid, respectively. CB powder was dispersed within CMC solution *via* a high mechanical stirrer (such as a Dispermat LC55) at 1500 rpm for minimum 15 min, then a defined amount of CHI solution was slowly added onto CB:CMC dispersion over 10 min to avoid formation of a bulk hydrogel. The mixture is left to be stirred for another 30 min under ambient conditions. Afterwards, to decrease the size of macro-sized hydrogel particles, the sample was firstly processed with an UltraTurrax stirrer for 20 min with increasing speed per 5 min from 5000 to 20000 rpm. It was then passed 20 times through a continuous high shear fluid process apparatus (such as M110P Microfluidizer from Microfluidics), under high pressure and through 200 µm and 100 µm reduction size chambers, respectively.

**Table 2: PEC-based MB formulations**

| **Master Batch** | **CMC (%, w/w)** | **CHI (%, w/w)** | **CB (%, w/w)** |
|---|---|---|---|
| **MB01** | 1 | 1 | 2 |
| **MB02** | 1 | 1 | 4 |
| **MB03** | 2 | 1 | 2 |
| **MB04** | 1 | 2 | 2 |

### 2. Physicochemical characterization of PEC-based Master Batches (MB)

Initial steps for the characterisation were performed to find out solid content (%) as mass ratio, pH of the master batch colloid, particle size distribution (PSD) and zeta potential (ZP) parameters, respectively. A thermal balance (Mettler Toledo) was used to analyse solid content with a program of drying at 110 °C and 50 mg/min. Electroacoustic Spectroscopy (Dispersion Technologies) equipped with a pH and temperature probe were conducted to perform PSD and ZP analysis after calibration with standard silica colloid. Further analysis was carried out to investigate buffering effect of formulated master batches *via* pH titrations by additions of HCl and/or NaOH.

### 3. ink formulations and printing: glucose oxidase as a model enzyme

Potential candidates from different master batches formulated with CMC:CHI:CB were tested to obtain inks containing Glucose Oxidase (GOx) as a model enzyme in this study. To generate the ink formulation, other carbon nanomaterials, a non-ionic binder and enzyme were used next to PEC-based master batches. Table 3 demonstrates the optimized mass ratios of ink formulations and inks were chosen, not only for their electrochemical activities, but also printing quality in terms of mechanical strength of PEC-based biofilm on paper. PEC-based bioelectrodes were prepared *via* stencil coating equipped with a doctor blade (50 mm/s of velocity under back-vacuum). Then, solvent (water) was evaporated by leaving the electrode under ambient atmosphere before implementing them as electrodes. Printed inks are used as "bioanodes" for a complete Biofuel Cell configuration and kept at ambient conditions for the further use.

**Table 3: Solid content composition of an ink formulation tested for printing via PEC colloids**

| **Components** | **%, w/w** |
|---|---|
| **MB** | 20 |
| **CNM-1** | 1.0 |
| **CNM-2** | 3.0 |
| **Binder** | 4.0 |
| **Enzyme** | 4.0 |
| **Graphite** | 68 |

| | |
|---|---|
| CNM: Carbon Nanomaterial. | |

### 4. Electrochemical performance of bioanodes

To study the possible buffering effect of PEC based ink system, paper-printed bioanodes were applied to electrochemical tests as part of a fuel cell configuration. Electrochemical performances were carried out within a three-electrode measurement system consisting of an Ag/AgCl electrode as reference, a platinum electrode as counter electrode and the printed bioanode as working electrode. Cyclic voltammetry was conducted to monitor the electrochemical responses by using a potentiostat (Biologic) between -0.2 V and 0.4 V (1 mV/s scan rate) and in the presence of 0.2 M glucose in ultrapure water with appropriate pH containing 0.1 M of Na₂SO₄, 1 mM of 1,10-phenanthroline-5,6-dione and 1 mM of 9,10-phenanthrenequinone mediators. Blank measurements were performed with the absence of glucose and experiments were repeated 7 times unless mentioned otherwise.

### EXAMPLE 2: RESULTS AND DISCUSSION

The invention associated with the production and use of PEC-based conductive colloids have been investigated and optimized and characterized within a series of studies to illustrate the effect of different parameters such as polymer complex materials, pH of PEC conductive colloids in terms of physicochemical and electrochemical approach.

**Table 4: Physicochemical characterization of different PEC-based MB colloids**

| **Master Batch** | **Particle Size (µm±S.D.)** | **Zeta Potential (mV±S.D.)** | **pH** |
|---|---|---|---|
| **MB01** | 3.22±0.21 | 28.76±3.14 | 4.6 |
| **MB02** | 2.513±0.27 | 2.66±0.057 | 3.87 |
| **MB03** | 1.71±0.12 | -13.2+0.09 | 5.54 |
| **MB04** | 4.74±0.42 | 36.5+0.26 | 5.01 |

Following the production of PEC colloids including CB, particle size distribution and zeta potential of bulk colloids were measured and illustrated in Table 4. As shown in Table 4, each combination with different ratios of polyelectrolytes illustrates varying characteristics with a particle size distribution in the range of less than 100 mm, preferably less than 10 mm, more preferably from 1-5 mm which is appropriate for coating and screen-printing processes. Zeta potential results give an idea about the colloidal stability. Polyelectrolytes like CMC and CHI are already known as stabilization agents in formulations [15]. Among other combinations of CB:CMC:CHI, **MB02** presented a lower charge in bulk solution due to the increased amount of CB particles and it's the only colloid sample which can lose its stability over time. In the case of **MB03,** CMC ratio was doubled, and a negative level charge was observed with an additional steric stabilization thanks to the high amount of -OH groups on polyelectrolytes.

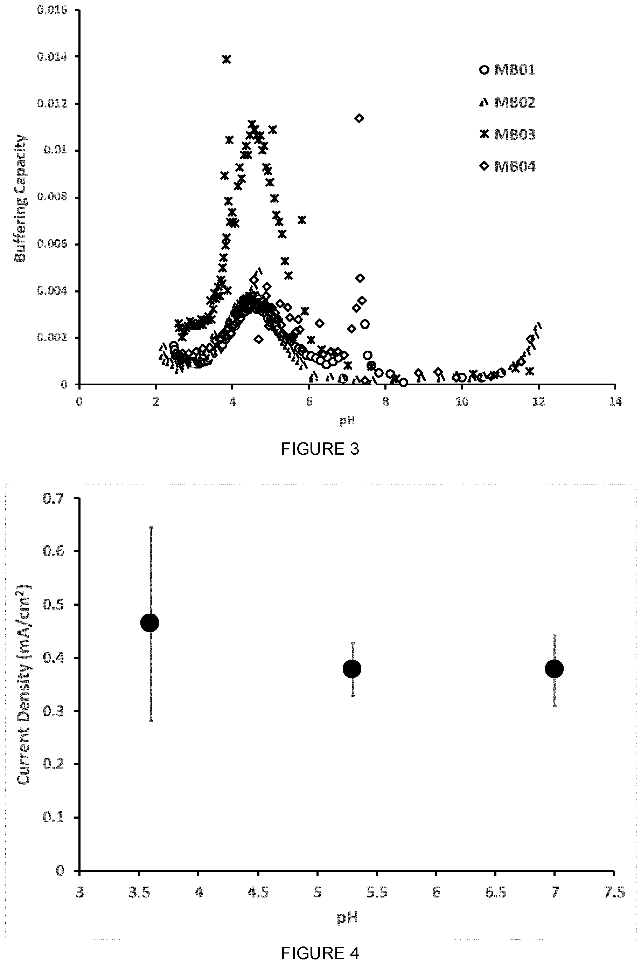

As one of the main embodiments in this invention, pH titrations were successfully performed with different PEC colloids of CMC and CHI. Figure 2 clearly reveals the potential of **MB03** sample as a base matrix for the final ink formulation. Buffering capacity of each PEC matrix were derivatized from pH titration curves and the peak point of the curves points the pKa of each matrix. As can be seen in Figure 3, every PEC matrix has a first strong pKa around 4.4 - 4.6 and a secondary pKa can be seen around neutral pH (6.7 - 7.5), except for **MB02** matrix which has higher amount of CB particles. This can be explained by the reduced concentration of polyelectrolytes which might create a complete electrostatic interaction among CMC, CHI and CB particles. Moreover, zeta potential analysis which is 2.66 mV supports this phenomenon. Under the light of this embodiment, ink formulations will be tested with **MB03** PEC matrix which contains higher CMC concentration.

In another embodiment of the invention, chosen conductive PEC colloid **(MB03)** was integrated into an ink formulation which contains a polymeric binder, other species of carbon materials and the model enzyme with optimized ratios. The final pH of this ink can be adjusted *via* PEC master batch. Hydrophilic nature of final ink formulation helps for a proper coating on paper and to work with multiple printed electrodes. In the next step, buffering capacity of this novel bioanodes were investigated by different combinations. As it is a well-known phenomenon, buffers help solutions to prevent changes of pH in the presence of some additives in the media. To monitor this effect, activation solutions, which are adjusted to different pHs in the range of buffering capacity of **MB03,** were tested within an electrochemical set up equipped with bioanodes. The result from this embodiment gives an idea about the pH stability of these novel bioanodes prepared *via* PEC-based biofunctional surfaces in water.

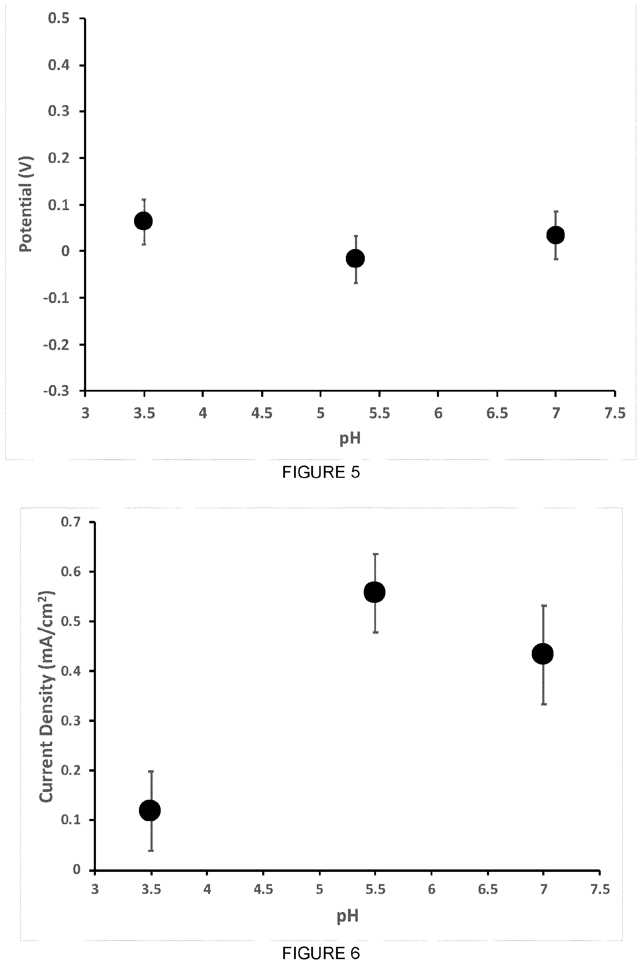

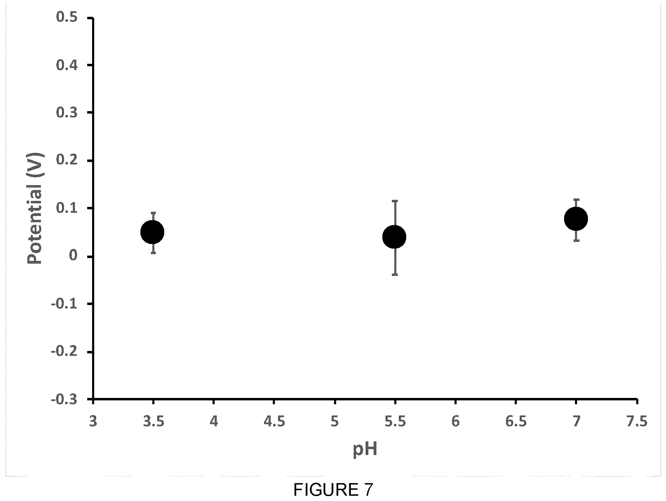

Figure 4, 5, 6 and 7 represent analysis of the electrochemical results in terms of catalytic current density (Figure 4 and 6) and open circuit voltages (Figure 5 and 7) under different pH conditions, respectively. As aforementioned, it can be seen that pH change in the activation solutions which contain mediators, salt and glucose did not cause a significant change in between three different pH as 3.5, 5.3 and 7.0, respectively. The error bar for pH 3 result was a bit higher than other two pHs. This can be linked to the used organic mediator's behaviour in acidic media where it affects an increment over current signals during redox process at the interface of electrodes. On the other hand, pH variation did not manifest a considerable effect over open circuit voltage values and found in between -0.05 and +0.05 V (Figure 5).

In the Figure 6 and 7, **MB03**-based bioanodes were tested within the same activation solution (pH 5.3) to test the electrochemical activities *via* CV and open circuit voltage analysis. Herein, effect of pH change in ink formulations was visualized within the structure of ink, printing and final electrochemical tests. In comparison with three conditions of varying pHs, ink with PEC which has pH 3.5 resulted with a more solidified structure and this issue brought many difficulties for the printing process on paper and cohesion, respectively. Since final ink formulations have a complex architecture and were optimized to obtain the best viscosity and stability for printing conditions under ambient conditions, decrease of pH highly affected the other interactions among PEC system, enzymes and carbon materials. Previous results showed that ink with the best PEC colloid is protected against external pH change, however, enzymes can be easily affected in their internal network media. Resulted data clearly indicates this case by giving an optimum pH at 5.5 which is the same pH than raw **MB03.** Furthermore, the medium pH change on inks did not create a difference over open circuit voltages and gave the same result around 0.0 V (Figure 7).

With these solid results in hand, it can be claimed that this novel PEC matrices are applicable to produce inks and compatible with the nature of enzymes without disturbing their activity. It is also shown that pH stability can be reached *via* this PEC-based functional biosurfaces without additional buffer solutions in the activation solution.

As aforementioned, the use of PEC matrices can be extended to other PEC polymer couples by obtaining a buffering range which is specific to other type of oxidoreductases such as glucose dehydrogenase, lactate oxidase, lactate dehydrogenase, multicopper oxidases and this invention should cover all those types of combinations.

### List of references

[1] E. Katz, K. MacVittie, Energy Environ Sci 2013, 6, 2791-2803.
[2] S. Cosnier, A. J. Gross, A. le Goff, M. Holzinger, J Power Sources 2016, 325, 252-263.
[3] P. Atanassov, M. Y. El-Naggar, S. Cosnier, U. Schröder, ChemElectroChem 2014, 1, 1702-1704.
[4] A. J. Gross, M. Holzinger, S. Cosnier, Energy Environ Sci 2018, 11, 1670-1687.
[5] R. A. Bullen, T. C. Arnot, J. B. Lakeman, F. C. Walsh, Biosens Bioelectron 2006, 21, 2015-2045.
[6] V. S. Meka, M. K. G. Sing, M. R. Pichika, S. R. Nali, V. R. M. Kolapalli, P. Kesharwani, Drug Discov Today 2017, 22, 1697-1706.
[7] V. Guarnizo-Herrero, C. Torrado-Salmerón, N. S. T. Pabón, G. T. Durán, J. Morales, S. Torrado-Santiago, Polymers (Basel) 2021, 13, DOI 10.3390/polym13162813.
[8] A. v. Briones, T. Sato, React Funct Polym 2010, 70, 19-27.
[9] F. Mizutani, Y. Hirata, S. Yabuki, Enzyme Electrode and Method of Manufacturing the Same, 1995, US005683563A.
[10] V. G. Gavalas, N. A. Chaniotakis, T. D. Gibson, Biosens Bioelectron 1998, 13, 1205-1211.
[11] A. A. Mendes, H. F. de Castro, D. de S. Rodrigues, W. S. Adriano, P. W. Tardioli, E. J. Mammarella, R. de C. Giordano, R. de L. C. Giordano, J Ind Microbiol Biotechnol 2011, 38, 1055-1066.
[12] L. L. Coria-Oriundo, M. L. Cortez, O. Azzaroni, F. Battaglini, Soft Matter 2021, 17, 5240-5247.
[13] H. Fukuda, Bull. Chem. Soc. Jpn. 1980, 837-840.
[14] H. Fukuda, Y. Kikuchi, Makromol. Chem 1979, 180, 1631-1633.
[15] J. Hierrezuelo, A. Sadeghpour, I. Szilagyi, A. Vaccaro, M. Borkovec, Langmuir 2010, 26, 15109-15111.

## Claims

1. Polyelectrolyte complex (PEC) system comprising a mixture of a polyanion, a polycation and mesoporous carbon.

2. PEC system according to claim 1, wherein the polyanion is chosen from the group consisting of carboxymethyl cellulose, carrageenan, sodium alginate, gellan gum, polygalacturonic acid, nucleic acid and its grafted versions, or a combination thereof.

3. PEC system according to claim 1 or 2, wherein the polycation is chosen from the group consisting of chitosan, gelatin, dextran, starch, poly(L-lysine) and its grafted versions or a combination thereof.

4. PEC system according to any one of claims 1 to 3, wherein the mesoporous carbon is chosen from the group consisting of carbon black, carbon aerogel, or a combination thereof.

5. PEC-based ink formulation comprising the mixture of the PEC system as defined in any one of claims 1 to 4 with at least one carbon-based nanomaterial, a non-ionic binder, an enzyme and graphite.

6. PEC-based ink formulation according to claim 5, wherein the at least one carbon-based nanomaterial is chosen from the group consisting of carbon nanotubes, nanohorns, nanofibers, nanowires, or a combination thereof.

7. PEC-based ink formulation according to claim 5 or 6, wherein the non-ionic binder is chosen from the group consisting of glue-like synthetic polymers (polyvinyl alcohol, poly(styrene-butadiene)), emulsions, polyvinylmethacrylate and its grafted versions, or a combination thereof.

8. PEC-based ink formulation according to any one of claims 5 to 7, wherein the enzyme is chosen from the group consisting of oxidoreductase, such as glucose oxidase, glucose dehydrogenase, lactate dehydrogenase, bilirubin oxidase, laccase.

9. Anode comprising a PEC-based ink formulation as defined in any one of claims 5 to 8.

10. Cathode comprising a PEC-based ink formulation as defined in any one of claims 5 to 8.

11. Biofuel cell comprising an anode and/or a cathode as defined in claim 9 and/or 10, respectively.

12. Method for preparing a PEC-based ink formulation as defined in any one of claims 5 to 8, said method comprising the steps of:
a) mixing a polycation, a polyanion and mesoporous carbon, to form a hydrogel;
b) stirring the mixture polycation:polyanion:mesoporous carbon of step a), to avoid macro-sized hydrogel particles; and
c) adding at least one carbon nanomaterials, a non-ionic binder, an enzyme and graphite to the mixture of step c).

13. Method according to claim 12, wherein step a) is carried out by dispersing powdered mesoporous carbon in a polyanion solution then by adding a polycation solution to the mixture.

14. Method according to claim 12 or 13, wherein step b) is carried out by stirring the mixture for 20 minutes with increasing speed per 5 minutes from 5000 to 20000 rpm.

15. Method according to claim 14, wherein step b) further comprises shearing the stirred mixture.

16. Use of a PEC-based ink formulation as defined in any one of claims 5 to 8, for asymmetric pH control in a biofuel cell.
